# EUROPEAN PATENT APPLICATION

(11) **EP 4 656 443 A1**
(43) Date of publication of application: **03.12.2025**
(21) Application number: 25178400.5
(22) Date of filing: 23.05.2025
(51) Int. Cl.: B60L 53/122, H02J 50/12, B60L 53/62, B60L 53/12, H02M 7/219, H02M 7/5387

(54) **SWITCH CONFIGURATION CONTROL FOR WIRELESS CHARGING CIRCUITS**

(30) Priority: 29.05.2024 US 202463653055 P
(71) Applicant: Tesla, Inc., Austin, TX 78725 (US)
(72) Inventor: Zheng, Liran, Austin, TX, 78725 (US); Pan, Fei, Austin, TX, 78725 (US); Zhang, Xuan, Austin, TX, 78725 (US)
(74) Representative: Liesegang, Eva

(57) **Abstract**

A method of wireless power transfer can include energizing a first wireless charging pad that includes a switching circuit, repeatedly toggling the switching circuit between a first switch configuration and a second switch configuration, and causing wireless power transfer from the first wireless charging pad to a second wireless charging pad using a voltage generated from the repeatedly toggling. During the repeatedly toggling, switches of a first half bridge of the switching circuit change a state between the first switch configuration and the second switch configuration, and switches of a second half bridge of the switching circuit remain in a same state for the first switch configuration and the second switch configuration. In certain embodiments, the first wireless charging pad can be a ground pad and the second wireless charging pad can be a vehicle pad of a vehicle. Other methods and related wireless charging pads are disclosed.

## Description

### CROSS-REFERENCE TO PRIORITY APPLICATION

This application claims priority to U.S. Provisional Patent Application No. 63/653,055, entitled "SWITCH CONFIGURATION CONTROL FOR WIRELESS CHARGING CIRCUITS," filed on May 29, 2024, the technical disclosure of which is hereby incorporated by reference in its entirety and for all purposes.

### TECHNICAL FIELD

The present disclosure relates to systems and methods for wireless charging. More particularly, embodiments of the present disclosure relate to wireless charging systems and mechanisms for charging vehicles using wireless charging circuits.

### BACKGROUND

Generally described, inductive charging and capacitive charging are types of wireless power transfer. Wireless power transfer can be referred to as wireless charging. Inductive charging uses electromagnetic induction to generate, or otherwise provide, electricity to devices without necessarily requiring physical electrical connectivity. Specifically, various devices can be placed near a charging station or inductive pad without being precisely aligned or making electrical contact, a physical dock, an electric plug, and the like. Such devices can include, but are not limited to, vehicles, manufacturing equipment, consumer electronics, medical devices, and the like.

### SUMMARY OF CERTAIN INVENTIVE ASPECTS

The systems, methods and devices of this disclosure each have several innovative embodiments, no single one of which is solely responsible for all of the desirable attributes disclosed herein. Details of one or more implementations of the subject matter described in this specification are set forth in the accompanying drawings and the description below.

In some aspects, the techniques described herein relate to a method of wireless power transfer, the method including: energizing a first wireless charging pad, the first wireless charging pad including a switching circuit; repeatedly toggling the switching circuit between a first switch configuration and a second switch configuration, wherein switches of a first half bridge of the switching circuit change a state between the first switch configuration and the second switch configuration, and wherein switches of a second half bridge of the switching circuit remain in a same state for the first switch configuration and the second switch configuration; and causing wireless power transfer from the first wireless charging pad to a second wireless charging pad using a voltage generated from the repeatedly toggling.

In some aspects, the techniques described herein relate to a method, further including: detecting one or more conditions, wherein the repeatedly toggling is performed in response to detecting the one or more conditions.

In some aspects, the techniques described herein relate to a method, wherein the one or more conditions relate to at least one of a load interfaced with the switching circuit, a voltage of a battery pack of a vehicle that includes the second wireless charging pad, or a voltage of a power supply associated with the first wireless charging pad.

In some aspects, the techniques described herein relate to a method, wherein a vehicle includes the second wireless charging pad, and a voltage of a battery pack of the vehicle is in a range from 200 Volts to 1000 Volts.

In some aspects, the techniques described herein relate to a method, wherein there is an unbalanced duty cycle between the first switch configuration and the second switch configuration for the repeatedly toggling.

In some aspects, the techniques described herein relate to a method, wherein the repeatedly toggling the switching circuit between the first switch configuration and the second switch configuration results in a lower voltage swing across a resonant tank of the first wireless charging pad that is electrically connected to the switching circuit compared with toggling the switching circuit between a third switch configuration, the first switch configuration, and the second switch configuration.

In some aspects, the techniques described herein relate to a method, wherein the switching circuit includes an H bridge circuit.

In some aspects, the techniques described herein relate to a method of wireless power transfer, the method including: wirelessly receiving power from a ground pad at a vehicle pad of a vehicle, the vehicle pad including a switching circuit; and repeatedly toggling the switching circuit between a first switch configuration and a second switch configuration, wherein switches of a first half bridge of the switching circuit change a state between the first switch configuration and the second switch configuration, and wherein switches of a second half bridge of the switching circuit are in a same state for both the first switch configuration and the second switch configuration.

In some aspects, the techniques described herein relate to a method, further including: detecting one or more conditions, wherein the repeatedly toggling is performed in response to detecting the one or more conditions.

In some aspects, the techniques described herein relate to a method, wherein the one or more conditions relate to at least one of a load interfaced with the switching circuit, a voltage range of a battery pack of the vehicle, or a voltage range of a power supply associated with the ground pad.

In some aspects, the techniques described herein relate to a method, wherein a voltage range of a battery pack of the vehicle is in a range from 200 Volts to 1000 Volts.

In some aspects, the techniques described herein relate to a method, wherein there is an unbalanced duty cycle between the first switch configuration and the second switch configuration for the repeatedly toggling.

In some aspects, the techniques described herein relate to a method, wherein the repeatedly toggling the switching circuit between the first switch configuration and the second switch configuration results in a lower voltage swing across a resonant tank of the vehicle pad that is electrically connected to the switching circuit compared with toggling the switching circuit between a third switch configuration, the first switch configuration, and the second switch configuration.

In some aspects, the techniques described herein relate to a method, further including charging a battery pack of the vehicle based on the power wirelessly received from the ground pad.

In some aspects, the techniques described herein relate to a wireless charging pad including: a switching circuit including a first half bridge and a second half bridge; a resonant tank electrically connected to the switching circuit, the resonant tank including a coil arranged for wireless power transfer; and a switch control circuit configured to repeatedly toggle the switching circuit between a first switch configuration and a second switch configuration, wherein the first half bridge changes a state between the first switch configuration and the second switch configuration, and wherein the second half bridge is in a same state in both the first switch configuration and the second switch configuration, wherein the wireless charging pad is configured to transfer sufficient wireless power for charging a battery pack with an operating voltage of at least 350 Volts.

In some aspects, the techniques described herein relate to a wireless charging pad, wherein the switch control circuit is further configured to detect one or more conditions, and wherein the switch control circuit configured to repeatedly toggle the switching circuit between the first switch configuration and the second switch configuration in response to detecting the one or more conditions.

In some aspects, the techniques described herein relate to a wireless charging pad, wherein the one or more conditions relate to at least one of a load interfaced with the switching circuit, a voltage range of a battery pack of a vehicle, or a voltage range of a power supply associated with the wireless charging pad.

In some aspects, the techniques described herein relate to a wireless charging pad, wherein the wireless charging pad is a ground pad.

In some aspects, the techniques described herein relate to a wireless charging pad, wherein the repeatedly toggling the switching circuit between the first switch configuration and the second switch configuration results in a lower voltage swing across the resonant tank compared with toggling the switching circuit between a third switch configuration, the first switch configuration, and the second switch configuration.

In some aspects, the techniques described herein relate to a wireless charging pad, wherein the switching circuit includes an H bridge circuit.

### BRIEF DESCRIPTION OF THE DRAWINGS

Throughout the drawings, reference numbers are re-used to indicate correspondence between referenced elements. The drawings are provided to illustrate examples of the subject matter described herein and not to limit the scope thereof.

Embodiments of the present disclosure are described with reference to the accompanying drawings, in which like reference characters reference like elements, and wherein:
FIG. 1A illustrates an example wireless charging environment in which embodiments of the present disclosure can be implemented.
FIG. 1B is a block diagram illustrating the example wireless charging environment of FIG. 1A in accordance with some embodiments of the present disclosure.
FIG. 1C illustrates a representation of a ground pad that may function as a wireless charging device in accordance with some embodiments of the present disclosure.
FIGS. 2A-2D illustrate example circuit schematic diagrams of wireless charging systems in accordance with some embodiments of the present disclosure.
FIG. 3 illustrates an example block diagram of a wireless charging pad according to some embodiments of the present disclosure.
FIGS. 4A-4D illustrate example switch configurations of a H bridge circuit of the wireless charging pad of FIG. 3 in accordance with some embodiments of the present disclosure.
FIGS. 5A-5C show example waveforms of voltage swings associated with operations of the wireless charging pad of FIG. 3 in accordance with some embodiments of the present disclosure.
FIG. 6 shows example waveforms of voltage swings associated with operations of the wireless charging pad of FIG. 3 in accordance with some embodiments of the present disclosure.

### DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure relate to systems and methods for wirelessly charging battery packs, which can have a relatively wide range of battery voltages. Illustratively, aspects of the present disclosure relate to wireless charging circuits that can operate under different input and output voltages through controlling switches of power electronics. In some embodiments, rather than periodically toggling (e.g., switching from open to closed, or switching from closed to open) each switch of a H bridge circuit in a wirelessly charging pad for a vehicle, a switch control circuit may control some switches of the H bridge circuit to toggle and control other switches of the H bridge circuit to not toggle when transitioning between states of the H bridge for wirelessly charging the vehicle. As such, a switch of the H bridge circuit may stay closed, a switch of the H bridge circuit may stay open, and some switches of the H bridge circuit may switch between closed and open states when transitioned between states of the H bridge for wirelessly transmitting and/or receiving power. For instance, the H bridge can repeatedly toggle between two switch configurations where one half bridge of the H bridge remains in a same state for the two switch configurations and the other half bridge of the H bridge changes states between the two switch configurations.

Advantageously, repeatedly toggling between particular switch configurations of a H bridge circuit controlled by the switch control circuit may result in a lower voltage swing across a resonant tank of a wireless charging pad (e.g., a ground pad and/or a vehicle pad), thereby allowing the wireless charging pad to charge battery packs under a relatively wide voltage range (e.g., from 200 V to 800 V or from 200 V to 1000 V). Additionally, fewer switching events associated with toggling between the particular switch configurations controlled by the switch control circuit may result in less energy loss.

Wireless charging devices are usable to wirelessly charge a vehicle, such as an electric vehicle with a battery pack. A wireless charging device (e.g., a ground pad or a vehicle pad) may cause power received from an external source, such as the grid, solar cell(s), and so on, to be wirelessly transmitted (e.g., via induction) to the electric vehicle. A ground pad may be positioned under a vehicle pad of an electric vehicle to charge the electric vehicle. A wireless charging direct current (DC)/DC converter (also referred to as aggregated DC/DC power converter) can include a DC/alternating current (AC) inverter in the ground pad, and an AC/DC rectifier in the vehicle pad. Power can be transmitted wirelessly from the ground pad to the vehicle pad.

Wireless charging systems can be employed to wirelessly charge vehicles under varying operating environments or conditions, such as aligned or misaligned parking positions and/or one or more of different vehicle power receiving platforms, air gaps, vehicle metallic bodies, battery voltages, coupling coefficients, or coil inductance values. Some wireless charging systems employ additional hardware to wirelessly charge vehicles under different conditions. For example, some wireless charging systems can include additional hardware to accommodate a relatively wide battery or power supply voltage range (e.g., 200V, 400V, 800V, or the like). The additional hardware may increase cost for building a wireless charging system. Furthermore, achieving efficient wireless power transfer to vehicles may be challenging due to energy loss resulting from toggling or switching of certain power electronics in wireless charging pads. For example, switches of a H bridge circuit in a wireless charging pad may frequently toggle, leading to deadtime loss.

To address at least a portion of the above technical problems, some embodiments of the present disclosure disclose a wireless charging pad capable of charging battery packs under wide voltage ranges by controlling switches of a H bridge circuit to switch among particular configurations. As noted above, rather than periodically toggling each switch of a H bridge circuit when transitioning from one configuration to another configuration, a switch control circuit may control some switches of the H bridge circuit to toggle and control other switches of the H bridge circuit to not toggle.

In some embodiments, the switch control circuit may control a first switch and a second switch arranged in a half-bridge of the H bridge circuit to toggle between open and closed states. The switch control circuit may control a third switch and a fourth switch arranged in the other half-bridge of the H bridge circuit to not toggle. For example, the switch control circuit may control the H bridge circuit to operate in a first switch configuration and a second switch configuration. In the first switch configuration, the first switch is closed, the second switch is open, the third switch is closed, and the fourth switch is open. In transitioning from the first configuration to the second switch configuration, the first switch is open, the second switch is closed, the third switch remains closed, and the fourth switch remains open.

Compared with situations where each of the first switch, the second switch, the third switch, and the fourth switch are controlled to toggle between open and closed states periodically, controlling the H bridge circuit to operate under the first switch configuration and the second switch configuration can result in a lower voltage swing (e.g., 50% reduction) across a resonant tank of a wireless charging pad, thereby allowing the wireless charging pad to charge battery packs under a relatively wide voltage range (e.g., from 200 V to 800 V or from 200 V to 1000 V). More specifically, the lower voltage swing can be due to the resonant tank's ability to maintain a more stable voltage when fewer switches toggle, as opposed to toggling all switches in a switching circuit (e.g., an H bridge circuit). The stability can reduce transient effects and/or energy dissipation. Additionally, fewer switching events associated with toggling between the first switch configuration and the second switch configuration controlled by the switch control circuit may result in less energy loss, such as deadtime loss. In some examples, the disclosed switching techniques (e.g., controlling the H bridge circuit to operate under the first switch configuration and the second switch configuration) can be applicable to capacitive power transfer (e.g., power transfer based on electric field coupling rather than magnetic field coupling).

In some embodiments, the switch control circuit may initially control the H bridge circuit such that each of the first switch, the second switch, the third switch, and the fourth switch periodically toggle between close and open states. Upon detecting one or more conditions, the switch control circuit may control the H bridge circuit to toggle between the first switch configuration and the second switch configuration or among other switch configurations such that some switch remains open or closed when toggling between the other switch configurations. In some embodiments, the one or more conditions may include, but are not limited to, a lighter load interfaced with the H bridge circuit, lower voltage ranges or higher voltage ranges associated with a battery pack to be charged or a power supply. Alternatively or additionally, the one or more conditions can include one or more of battery voltage being within certain ranges (e.g., due to battery packs having different voltage levels or different levels of state of charge of a battery pack), voltage provided to a ground pad being within certain ranges, specified power level being within certain ranges, coupling coefficients associated with the H bridge circuit being within certain ranges, parking inaccuracy being within certain ranges, or measured inductance variations being in certain ranges.

Although the various aspects will be described in accordance with illustrative embodiments and a combination of features, one skilled in the relevant art will appreciate that the examples and combination of features are illustrative in nature and should not necessarily be construed as limiting. More specifically, aspects of the present application may be applicable with various types of vehicle charging mechanisms, power sources, interfaces, and the like. Still further, although a specific H bridge circuit schematic for charging batteries and/or battery packs under different voltage levels will be described, such illustrative H bridge circuit schematic should not necessarily be construed as limiting. Accordingly, one skilled in the relevant art will appreciate that the aspects of the present application are not necessarily limited to application to any particular type of vehicle, vehicle charging infrastructure, communications or illustrative interactions between vehicles, owners/users and wireless battery charging systems.

### Overview of Wireless Charging

Generally described, inductive charging, commonly referred to as wireless charging, is a type of wireless power transfer. Inductive charging uses electromagnetic induction to generate, or otherwise provide, electricity to devices without requiring physical electrical connectivity. Specifically, various devices can be placed near a charging station or inductive pad without needing to be precisely aligned or make electrical contact, a physical dock, an electric plug and the like. Such devices include, but are not limited to, vehicles, manufacturing equipment, consumer electronics, medical devices, and the like.

In accordance with aspects of the present application, inductive charging systems are configured to transfer energy through inductive coupling between components. An illustrative charging system includes a transferring component, which may be configured as a charging station or charging pad. A charging pad for wirelessly transferring power to a vehicle can be referred to as a ground pad. An alternating current (e.g., an input current) from a power source passes through an induction coil in the charging station or pad. Based on the input current, the moving electric charge through the induction coil (e.g., a ground pad coil) creates (or elicits) a magnetic field. Illustratively, the strength of the magnetic field may fluctuate, at least in part, on changes or fluctuations in the input electric current's amplitude. The changing magnetic field creates an alternating electric current in an induction coil on a receiving device (e.g., a vehicle pad coil). The induced alternating current in the receiving device can then pass through a rectifier, converting the induced alternating current to a direct current. Finally, the receiving vehicle can include additional charging components and/or systems that utilize the converted direct current to charge battery systems, provide operating power, or a combination thereof.

Greater distances between the ground pad and vehicle pad coils can be achieved when illustrative inductive charging systems use resonant inductive coupling components/techniques. More specifically, in some embodiments, a capacitor can be connected to each induction coil to create two LC circuits with a specific resonance frequency. The frequency of the alternating current is matched with the resonance frequency. Additionally, the matched frequency can be further chosen depending on a typical distance between the sending device and the receiver device with consideration for peak efficiency. Still further, use of other materials for the receiver coil such as silver-plated copper or sometimes aluminum to minimize weight and decrease resistance can be utilized for purposes of energy transfer efficiencies.

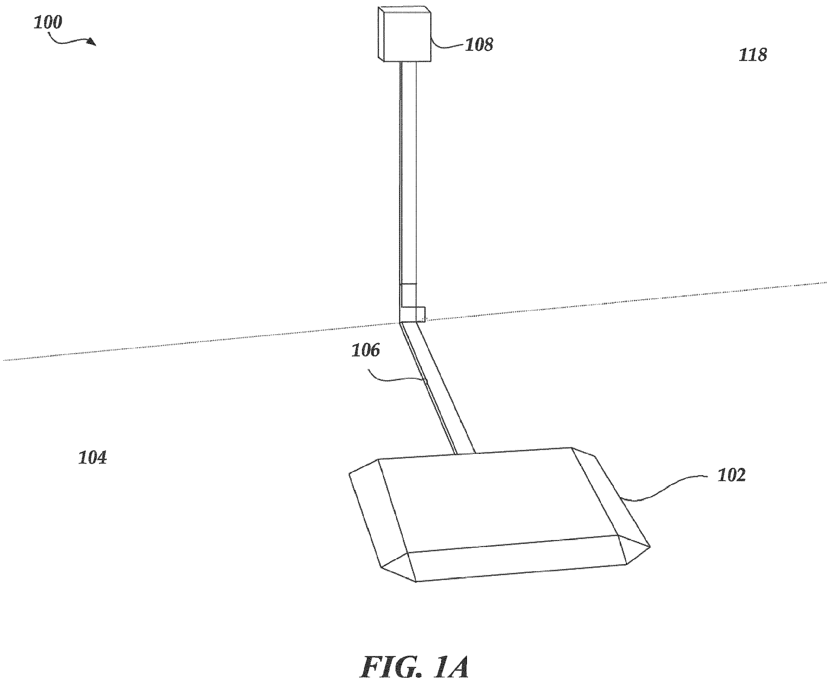

FIG. 1A is a diagram illustrative of an environment 100 for implementing an induction-based wireless charging system in accordance with various aspects of the present application. The environment 100 illustratively can correspond to commercial implementations, such as parking lots, parking stalls, charging booths, and the like. The environment 100 can correspond to private or other non-commercial implementations, such as private residences, etc. By way of an illustrative example, an implementation of an induction-based wireless charging system in a non-commercial implementation can include a ground pad 102 that is configured to generate variable magnetic fields in accordance with an induction charging methodology. As also illustrated in FIG. 1A, the ground pad 102, which can also be referred to as a transmitting component, can correspond to a stand-alone component that may be operable to be mounted or placed on a floor 104 or other planar surface. In some other embodiments, the ground pad 102 can be integrated or combined with other devices or components.

The ground pad 102 may be connected to one or more power sources, such as an input from a utility company, real-time power sources (e.g., solar cells or wind energy sources), stored energy cells, or a combination thereof. The power sources are configured to provide the input alternating current as described herein. The ground pad 102 may be connected via direct electric connection 106 to the power source, such as via a junction box 108 located on a wall surface 118.

As illustrated in FIG. 1A, in embodiments, the ground pad 102 corresponds to a form factor that allows for the location on the floor 104 for wirelessly charging with a vehicle having a vehicle pad coil. The ground pad 102 may have a form factor such that the vehicle may be located directly above a top surface of the ground pad 102. Illustratively, the dimensions of the ground pad 102 (e.g., the height and width of the ground pad 102) may be configured so that a distance between the top surface of the ground pad 102 and a bottom surface of the vehicle meets specific criteria, such as minimum distance between the ground pad coil and vehicle pad coil, maximum distance between the ground pad coil and the vehicle pad coil, and the like. In some embodiments, the vehicle pad and/or ground pad 102 (or combination) may be configured with additional components for adjusting (e.g., statically adjusting and/or dynamically adjusting) such distance or otherwise changing the relative orientation between the ground pad 102 and the vehicle.

In some embodiments, the ground pad 102 can be configured to charge a battery pack of a vehicle, wherein the battery pack can have a nominal voltage of over 200 Volts (e.g., a nominal voltage of about 350 Volts or 355 Volts) and a maximum voltage of 400 Volts. In some embodiments, the ground pad 102 can be configured to supply 800 Volts of direct current power. In some embodiments, the ground pad 102 can supply a voltage in a range from about 200 Volts to 1000 Volts, such as a range from about 200 Volts to 800 Volts. The ground pad 102 can wirelessly transfer sufficient power to charge battery packs with such voltages.

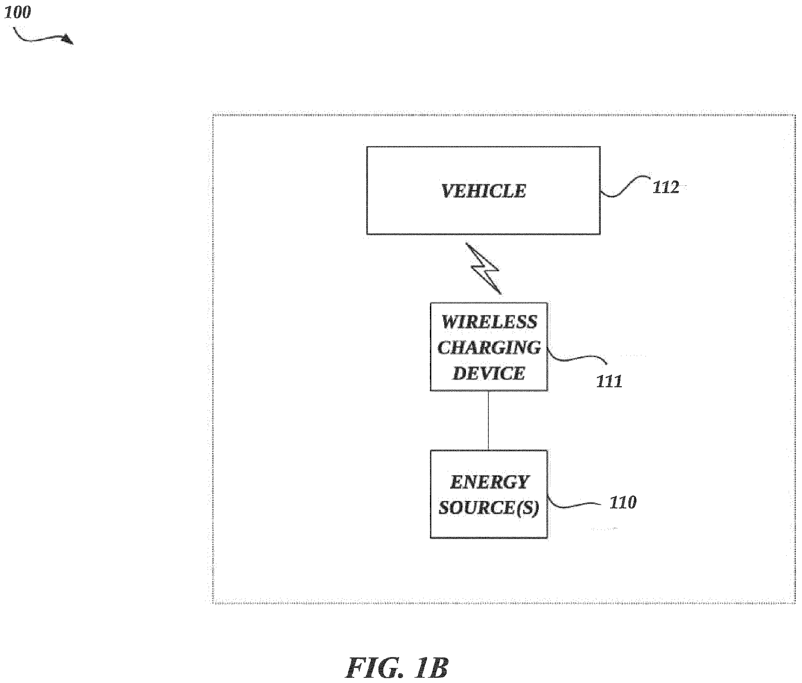

FIG. 1B illustrates a block diagram of the environment 100 including a wireless charging device 111 (e.g., the ground pad 102) in wireless communication with a vehicle 112, such as via induction-based magnetic fields. The wireless charging device 111 is further connected to one or more energy sources 110. Although the wireless charging device 111 is illustrated with a direct connection to the energy sources 110, at least some portion of the input alternating current could be provided via a wireless transmission method. Additionally, in embodiments with multiple power sources, the environment may also include various switching components to cause the selection of energy from individual energy sources 110 or a combination of energy sources 110.

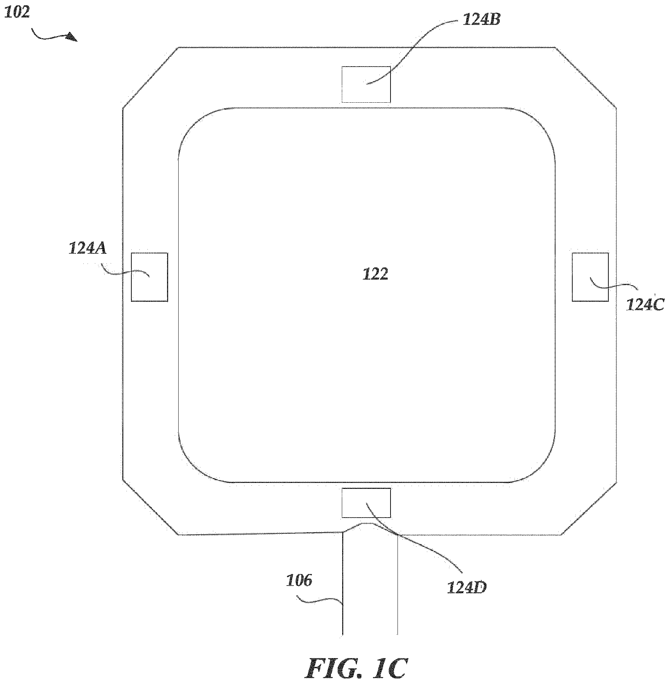

FIG. 1C illustrates a block diagram of a ground pad 102 that may function as a wireless charging device 111 (shown in FIG. 1B). The ground pad 102 can include at least a ground pad coil 122 for causing the generation of magnetic fields from an input current provided from an energy source 110. As illustrated in FIG. 1C, the input current can be provided by a direct electric connection 106.

In some embodiments, the ground pad 102 can also include various sensor components 124A, 124B, 124C, 124D related to the charging process. By way of illustration, the sensor components 124A, 124B, 124C, 124D can be configured for various functions, such as detection of the vehicle 112, detection of objects, measurement of distances to the vehicle, environmental sensors (e.g., temperature sensors, moisture sensors), pressure sensors, and the like. In an embodiment, the sensor components 124A, 124B, 124C, 124D can include radar sensors. The sensor components 124A, 124B, 124C, 124D can include logic and processing components related to the charging process including operational measurements, operational control, safety measurements, communication components and the like.

### Wireless Charging Systems with H Bridge Circuits

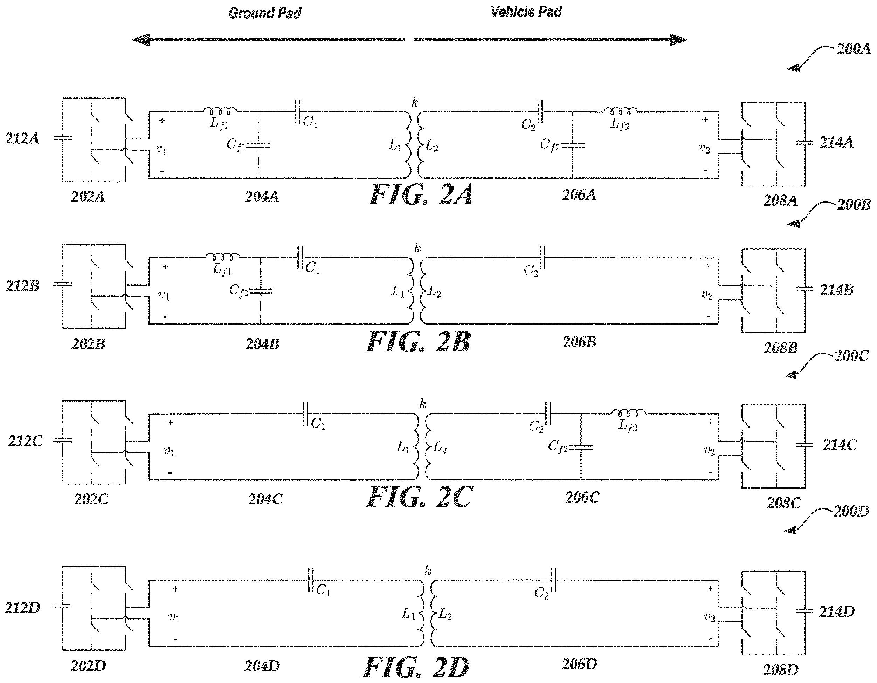

FIGS. 2A-2D illustrate circuit schematic diagrams of example wireless charging systems 200A-200D. As shown in FIGS. 2A-2D, each of the wireless charging systems 200A-200D may include a ground pad (e.g., the ground pad 102) and a vehicle pad that is attached to or otherwise integrated with a vehicle. For example, the ground pad of the wireless charging system 200A may include a capacitor 212A, a H bridge circuit 202A, and a resonant tank 204A as shown in FIG. 2A. A vehicle pad of the wireless charging system 200A may include a capacitor 214A, a H bridge circuit 208A, and a resonant tank 206A, for example, as shown in FIG. 2A. In some embodiments, power may be transferred from a power source (not shown in FIG. 2A) through the H bridge circuit 202A, the resonant tank 204A, the resonant tank 206A, and the H bridge circuit 208A to a battery pack (not shown in FIG. 2A) of a vehicle. This power transfer can include wireless power transfer from a coil L1 of the ground pad to a coil L2 of the vehicle pad. Any of the wireless charging systems 200A-200D can be implemented in accordance with any suitable principles and advantages disclosed herein.

FIG. 2A illustrates a circuit schematic diagram of the wireless charging system 200A. As shown in FIG. 2A, the wireless charging system 200A corresponds to an LCC-LCC circuit architecture. As illustrated, the wireless charging system 200A includes the capacitor 212A, the H bridge circuit 202A, the resonant tank 204A, the resonant tank 206A, the H bridge circuit 208A, and the capacitor 214A. In an LCC-LCC circuit architecture, an inductor L_{f1} and capacitors C_{f1} and C₁ are coupled between the H bridge circuit 202A and the ground pad coil L₁ in the ground pad, and the inductor L_{f2} and capacitors C_{f2} and C₂ are coupled between the H bridge circuit 208A and the vehicle pad coil L₂ in the vehicle pad.

FIG. 2B illustrates a circuit schematic diagram of the wireless charging systems 200B. As shown in FIG. 2B, the wireless charging system 200B corresponds to a LCC-Series circuit architecture. As illustrated, the wireless charging system 200B includes the capacitor 212B, the H bridge circuit 202B, the resonant tank 204B, the resonant tank 206B, the H bridge circuit 208B, and the capacitor 214B. In an LCC-series circuit architecture, an inductor L_{f1} and capacitors C_{f1} and C₁ are coupled between the H bridge circuit 202A and the ground pad coil L₁ in the ground pad, and the series capacitor C₂ is coupled between the H bridge circuit 208A and the vehicle pad coil L₂ in the vehicle pad.

FIG. 2C illustrates a circuit schematic diagram of the wireless charging systems 200C. As shown in FIG. 2C, the wireless charging system 200C corresponds to a Series-LCC circuit architecture. As illustrated, the wireless charging system 200C includes the capacitor 212C, the H bridge circuit 202C, the resonant tank 204C, the resonant tank 206C, the H bridge circuit 208C, and the capacitor 214C. In a series-LCC circuit architecture, series capacitor C₁ is coupled between the H bridge circuit 202A and the ground pad coil L₁ in the ground pad, and the inductor L_{f2} and capacitors C_{f2} and C₂ are coupled between the H bridge circuit 208A and the vehicle pad coil L₂ in the vehicle pad.

FIG. 2D illustrates a circuit schematic diagram of the wireless charging systems 200D. As shown in FIG. 2D, the wireless charging system 200D corresponds to a Series-Series circuit architecture. As illustrated, the wireless charging system 200D includes the capacitor 212D, the H bridge circuit 202D, the resonant tank 204D, the resonant tank 206D, the H bridge circuit 208D, and the capacitor 214D. In a series-series circuit architecture, series capacitor C₁ is coupled between the H bridge circuit 202A and the ground pad coil L₁ in the ground pad, and series capacitor C₂ is coupled between the H bridge circuit 208A and the vehicle pad coil L₂ in the vehicle pad.

### Example Wireless Charging Pad

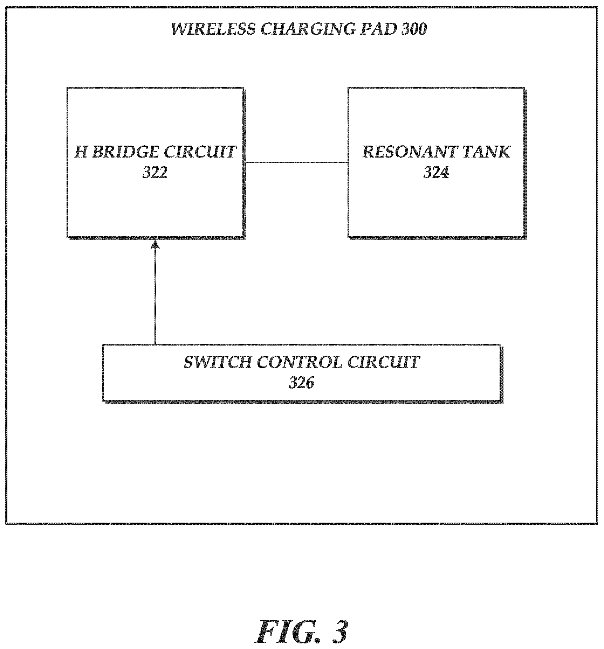

FIG. 3 illustrates an example wireless charging pad 300 in accordance with some embodiments of the present disclosure. The wireless charging pad 300 includes a H bridge circuit 322, a resonant tank 324, and a switch control circuit 326. The wireless charging pad 300 can charge battery packs of vehicles under relatively wide voltage ranges through toggling switches of the H bridge circuit 322. Any suitable principles and advantages of the wireless charging pad 300 can be implemented in an environment in accordance with any suitable principles and advantages of FIGS. 1A to 1C.

The wireless charging pad 300 may be implemented on any ground pads or vehicle pads of the wireless charging systems 200A-200D to extend operable voltage ranges and/or increase wireless charging efficiency. For example, the wireless charging pad 300 may be a ground pad and/or a vehicle pad of any of the wireless charging systems 200A-200D. In some embodiments, the H bridge circuit 322 can correspond to any of the H bridge circuit 202A, H bridge circuit 208A, H bridge circuit 202B, H bridge circuit 208B, H bridge circuit 202C, H bridge circuit 208C, H bridge circuit 202D, and H bridge circuit 208D. The resonant tank 324 can correspond to any of the resonant tank 204A, resonant tank 206A, resonant tank 204B, resonant tank 206B, resonant tank 204C, resonant tank 206C, resonant tank 204D, and resonant tank 206D.

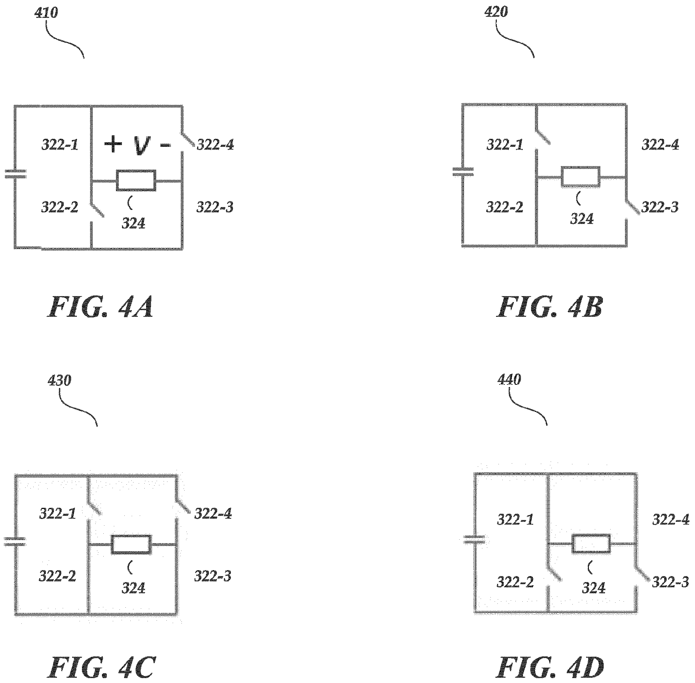

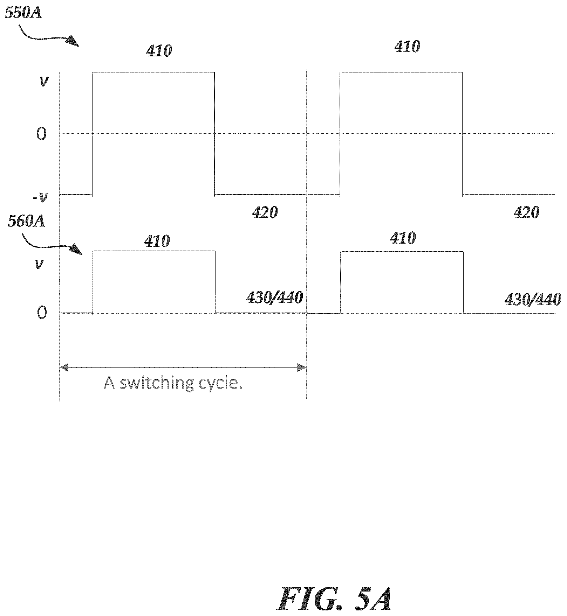

As will be illustrated in FIGS. 4A-4D, the H bridge circuit 322 may include a switch 322-1, a switch 322-2, a switch 322-3, and a switch 322-4. In some embodiments, rather than periodically switching each of the switch 322-1, switch 322-2, switch 322-3, and switch 322-4, the switch control circuit 326 may control some of the switch 322-1, switch 322-2, switch 322-3, and switch 322-4 to be periodically switched between open and closed states and control some of the switch 322-1, switch 322-2, switch 322-3, and switch 322-4 to remain open or closed without toggling. As such, voltage swing across the resonant tank 324 may be reduced relative to other switching schemes as will be illustrated in FIGS. 5A-5C to allow the wireless charging pad 300 to charge battery packs under wider voltage ranges.

The switch control circuit 326 can provide control signals to control the states of the switch of the H bridge circuit 322 (e.g., switches 322-1 to 322-4 of FIGS. 4A to 4D). The switch control circuit 326 can be implemented by any suitable circuitry to control the state of the switches of the H bridge circuit 322. When switches of the H bridge circuit 322 have gates (e.g., the switches are FETs or IGBTs), the switch control circuit 326 can provide control signals to the gates of the H bridge. In such instances, the switch control circuit 326 can be referred to as a gate drive circuit.

In some other examples, any other suitable types of switching circuits (e.g., a switching circuit that includes two stacked half bridge circuits) can be implemented in place of the H bridge circuit 322. For example, the switch control circuit 326 can control some switches of a switching circuit to toggle and control other switches of the switching circuit to not toggle when transitioning between states of the switching circuit for wirelessly charging a vehicle in accordance with any suitable principles and advantages disclosed herein. Any suitable principles and advantages disclosed herein with reference an H bridge circuit can be applied to any other suitable switching circuit.

### Example H Bridge Switch Configurations

FIGS. 4A-4D show example switch configurations of the H bridge circuit 322 that may be controlled by the switch control circuit 326 in accordance with some embodiments of the present disclosure. FIG. 4A shows the H bridge circuit 322 may be configured by the switch control circuit 326 to a switch configuration 410, which can be referred to as a positive configuration. FIG. 4B shows the H bridge circuit 322 may be configured by the switch control circuit 326 to a switch configuration 420, which can be referred to as a negative configuration. FIG. 4C shows the H bridge circuit 322 may be configured by the switch control circuit 326 to a switch configuration 430, which can be referred to as a zero 1 configuration. FIG. 4D shows the H bridge circuit 322 may be configured by the switch control circuit 326 to a switch configuration 440, which can be referred to as a zero 2 configuration.

The H bridge circuit 322 includes four switches switch 322-1, switch 322-2, switch 322-3, and 322-4. These switches can be any suitable switches for power electronics, such as n type field effect transistors arranged to switch sufficient voltage for wireless charging disclosed herein. In certain applications, the H bridge circuit 322 can include metal oxide filed effect transistors (MOSFETs). Alternatively or additionally, the H bridge circuit 322 can include insulated-gate bipolar transistors (IGBTs). The switches of the H bridge circuit 322 can be arranged to pass 100s of Volts. The H bridge circuit 322 includes a first half bridge and a second half bridge. The first half bridge includes switches 322-1 and 322-2. The second half bridge includes switches 322-3 and 322-4.

As shown in FIG. 4A, in switch configuration 410, the switch 322-1 is closed, the switch 322-2 is open, the switch 322-3 is closed, and the switch 322-4 is open. As shown in FIG. 4B, in switch configuration 420, the switch 322-1 is open, the switch 322-2 is closed, the switch 322-3 is open, and the switch 322-4 is closed. As shown in FIG. 4C, in switch configuration 430, the switch 322-1 is open, the switch 322-2 is closed, the switch 322-3 is closed, and the switch 322-4 is open. As shown in FIG. 4D, in switch configuration 440, the switch 322-1 is closed, the switch 322-2 is open, the switch 322-3 is open, and the switch 322-4 is closed.

In some embodiments, rather than toggling between the switch configuration 410 and the switch configuration 420, the switch control circuit 326 may control the H bridge circuit to toggle among the switch configuration 410 and the switch configuration 430 or switch among the switch configuration 420 and the switch configuration 440. Compared with toggling between the switch configuration 410 and the switch configuration 420, toggling between the switch configuration 410 and the switch configuration 430 or toggling between the switch configuration 420 and the switch configuration 440 may result in less (e.g., 50% decrease) voltage swing across a resonant tank (e.g., the resonant tank 324 of FIG. 3) such that a wireless charging pad (e.g., the wireless charging pad 300) may be utilized to charge battery packs under wider voltage ranges (e.g., between 200 V and 800 V or between 200 V and 800 V). When toggling between switch configuration 410 and 430, the switches in the second half bridge remain the in same state and the switches in the first half bridge change state. Similarly, when toggling between switch configuration 420 and 440, the switches in the first half bridge remain the in same state and the switches in the second half bridge change state. Additionally, compared with toggling between the switch configuration 410 and the switch configuration 420, less switching events may result in less energy loss, such as less deadtime loss.

In some embodiments, the switch control circuit 326 may initially control the H bridge circuit 322 such that the H bridge circuit 322 switches between the switch configuration 410 and the switch configuration 420. Upon detecting one or more conditions, the switch control circuit 326 may control the H bridge circuit 322 to switch among the switch configuration 410 and the switch configuration 430 or among the switch configuration 420 and the switch configuration 440 such that switches of only one of the half bridges of the H bridge change state during switching between two switching configurations. In some embodiments, the one or more conditions may include, but not limited to, one or more of a lighter load interfaced with the H bridge circuit 322, lower voltage ranges associated with battery packs or power supplies, or higher voltage ranges associated with battery packs to be charged or power supply. Alternatively or additionally, the one or more conditions can include one or more of battery voltage being within certain ranges (e.g., due to battery packs having different voltage levels or different levels of state of charge of a battery pack), voltage provided to a ground pad being within certain ranges, specified power level being within certain ranges, coupling coefficients associated with the H bridge circuit 322 being within certain ranges, parking inaccuracy being within certain ranges, or measured inductance variations being in certain ranges.

### Example Voltage Swing Waveforms

Disclosed H bridge circuits can repeatedly switch between two switch configurations. Examples of toggling between two switch configurations will be discussed with reference to FIGS. 5A to 6. Such toggling between two switch configurations can be performed by an H bridge circuit on a ground pad, an H bridge circuit on a vehicle pad, or H bridge circuits on both a ground pad and a vehicle pad. In some instances, such toggling between two switch configurations can be performed by an H bridge circuit on a ground pad and a vehicle pad can have a different switching circuit topology. According to some other instances, such toggling between two switch configurations can be performed by an H bridge circuit on a vehicle pad and a ground pad can have a different switching circuit topology.

FIG. 5A shows example waveforms 550A and 560A associated with operations of the wireless charging pad 300 of FIG. 3 in accordance with some embodiments of the present disclosure. More specifically, the waveforms 550A and 560A illustrate voltage swings and voltage across the resonant tank 324 as the H bridge circuit 322 switches between various switch configurations. The voltage across the resonant tank 324 may correspond to any of the voltages *v*₁ (shown in FIGS. 2A-2D) associated with the resonant tank 204A, resonant tank 204B, resonant tank 204C, and resonant tank 204D, or any of the voltages *v*₂ (shown in FIGS. 2A-2D) associated with the resonant tank 206A, resonant tank 206B, resonant tank 206C, and resonant tank 206D. The waveform 550A shows that a voltage swing across the resonant tank 324 may be 2v when the H bridge circuit 322 switches between the switch configuration 410 and the switch configuration 420. In contrast, the waveform 560A shows that a voltage swing across the resonant tank 324 may be v when the H bridge circuit 322 switches between the switch configuration 410, and a zero switch configuration (the switch configuration 430 or the switch configuration 440).

The waveform 550A is associated with the H bridge circuit 322 repeatedly switching between the switch configuration 410 and the switch configuration 420. When the H bridge circuit 322 is in the switch configuration 410, a voltage across the resonant tank 324 may be around v. When the H bridge circuit 322 is in the switch configuration 420, the voltage across the resonant tank 324 may be around -v. In some embodiments, v may be in a range from 200 V to 400 V.

The waveform 560A is associated with the H bridge circuit 322 repeatedly switching between the switch configuration 410, and the switch configuration 430 or the switch configuration 440. When the H bridge circuit 322 is in the switch configuration 410, the voltage across the resonant tank 324 may be around v. When the H bridge circuit 322 is in the switch configuration 430 or the switch configuration 440, the voltage across the resonant tank 324 may be around 0 (e.g., a ground voltage).

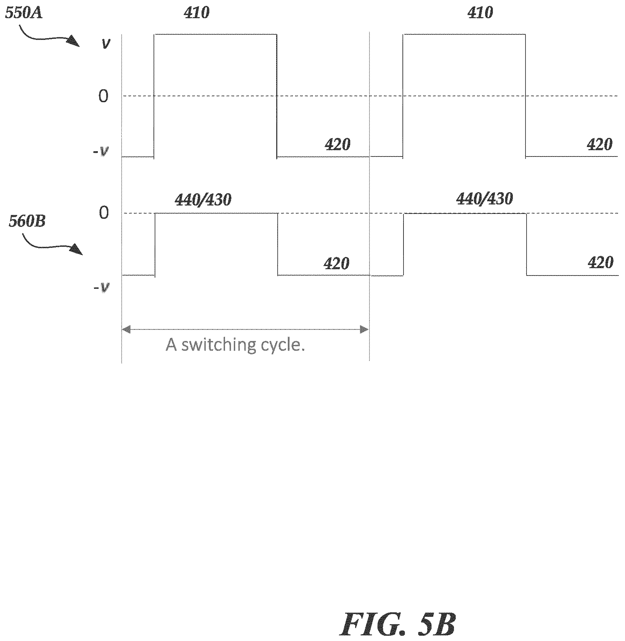

FIG. 5B shows example waveforms 550A and 560B associated with operations of the wireless charging pad 300 in accordance with some embodiments of the present disclosure.

As noted above, the waveform 550A is associated with the H bridge circuit 322 switching between the switch configuration 410 and the switch configuration 420. When the H bridge circuit 322 is in the switch configuration 410, a voltage across the resonant tank 324 may be around v. When the H bridge circuit 322 is in the switch configuration 420, the voltage across the resonant tank 324 may be around -v.

The waveform 560B is associated with the H bridge circuit 322 switching between a zero switch configuration (the switch configuration 440 or the switch configuration 430), and the switch configuration 420. When the H bridge circuit 322 is in the switch configuration 420, the voltage across the resonant tank 324 may be around -v. When the H bridge circuit 322 is in the switch configuration 440 or the switch configuration 430, the voltage across the resonant tank 324 may be around 0 (e.g., a ground voltage). The waveform 560B is like the waveform 560A, except that the waveform 560B switches between -v and 0 while the waveform 560B switches between v and 0. The waveforms 560A and 560B both have a voltage switch with a magnitude of v.

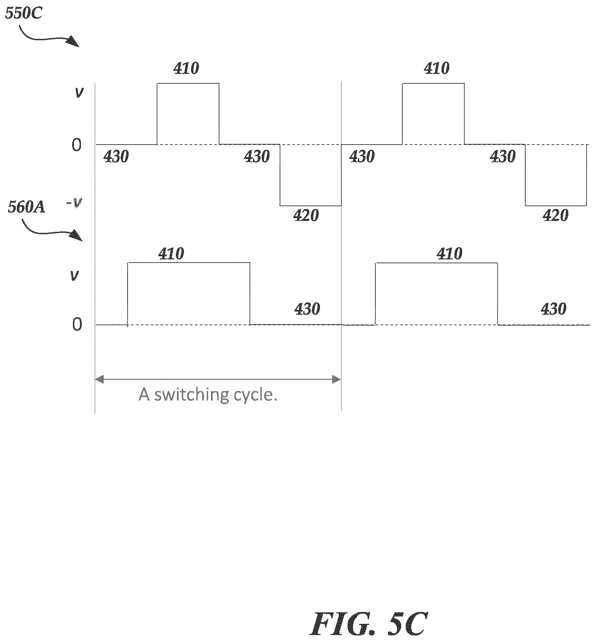

FIG. 5C shows example waveforms 550C and 560A associated with operations of the wireless charging pad 300 in accordance with some embodiments of the present disclosure.

The waveform 550C is associated with the H bridge circuit 322 switching between the switch configuration 410, the switch configuration 420, and the switch configuration 430. When the H bridge circuit 322 is in the switch configuration 410, a voltage across the resonant tank 324 may be around v. When the H bridge circuit 322 is in the switch configuration 420, the voltage across the resonant tank 324 may be around -v. When the H bridge circuit 322 is in the switch configuration 430, the voltage across the resonant tank 324 may be around 0. In the waveform 550C, toggling between voltage configurations results in a voltage switch with a magnitude of v, where the total voltage swing in the waveform is 2v.

As noted above, the waveform 560A is associated with the H bridge circuit 322 switching between the switch configuration 410 and the switch configuration 430. When the H bridge circuit 322 is in the switch configuration 410, the voltage across the resonant tank 324 may be around v. When the H bridge circuit 322 is in the switch configuration 430, the voltage across the resonant tank 324 may be around 0 (e.g., a ground voltage).

In some embodiments, the switch control circuit 326 may control the H bridge circuit 322 to alternate switching between the switch configuration 410 and the switch configuration 430 or switching between the switch configuration 440 and the switch configuration 420, without switching between the switch configuration 410 and the switch configuration 420. Compared with switching between the switch configuration 410 and the switch configuration 420, voltage swings across the resonant tank 324 may be reduced by around 50% as illustrated by the waveforms 560A and 560B, thereby enabling wireless charging under wider voltage ranges. At the same time, the duty cycle can be unchanged. Additionally, wireless power transfer through the wireless charging pad 300 may be more efficient in certain applications because of fewer switching events resulting from not switching between the switch configuration 410 and the switch configuration 420.

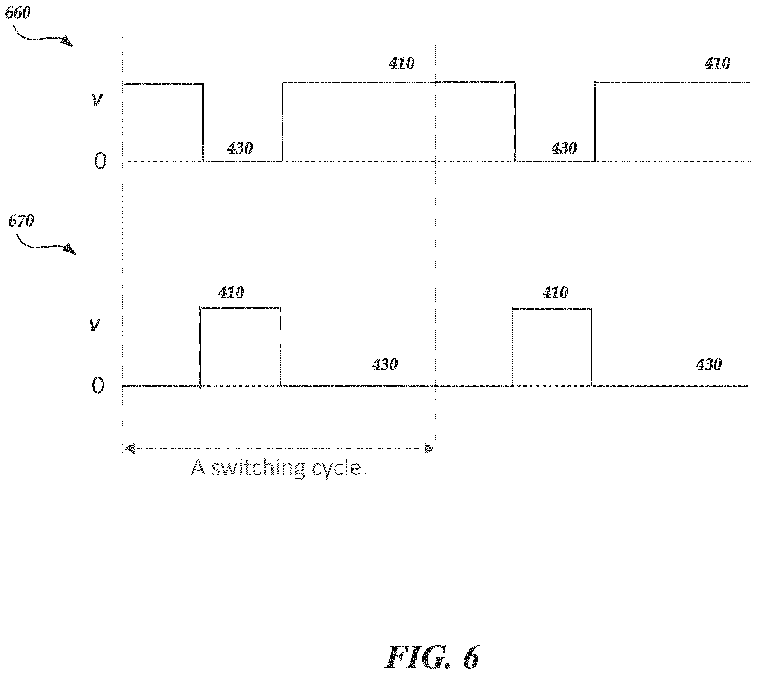

FIG. 6 shows example waveforms 660 and 670 associated with operations of the wireless charging pad 300 in accordance with some embodiments of the present disclosure. More specifically, the waveforms 660 and 670 illustrate various duty cycles associated with voltages across the resonant tank 324 as the H bridge circuit 322 toggles between the switch configuration 410 and the switch configuration 430.

The waveform 660 illustrates that, for each switching cycle, the H bridge circuit 322 may be at the switch configuration 410 longer than the switch configuration 430. The waveform 670 illustrates that, for each switching cycle, the H bridge circuit 322 may be at the switch configuration 430 longer than the switch configuration 410. The waveforms 660 and 670 show that toggling between switching configurations in which one half bridge of an H bridge switches state and the other half bridge is unchanged can be performed with different duty cycles. Toggling between switch configurations 410 and 430 can be performed at any suitable duty cycle. Similarly, toggling between switch configurations 420 and 440 can be performed at any suitable duty cycle. In some instances, an H bridge circuit can repeatedly toggle between two switch configurations such that the two switch configurations have an unbalanced duty cycle.

### Conclusion

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the example, some acts, events, or functions of any of the algorithms described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

The various illustrative logical blocks and modules described in connection with the examples disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combination of the same, or the like. A processor can include electrical circuitry to process computer-executable instructions. In some examples, a processor includes an FPGA or other programmable device that performs logic operations without processing computer-executable instructions. A processor can also be implemented as a combination of computing devices, for example, a combination of a DSP and a microprocessor, a plurality of microprocessors, microprocessors in conjunction with a DSP core, or any other such configuration. Although described herein primarily with respect to digital technology, a processor may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The processes described herein or illustrated in the figures of the present disclosure may begin in response to an event, such as on a predetermined or dynamically determined schedule, on demand when initiated by a user or system administrator, or in response to some other event. When such processes are initiated, a set of executable program instructions stored on one or more non-transitory computer-readable media (e.g., hard drive, flash memory, removable media, etc.) may be loaded into memory (e.g., RAM) of a server or other computing device. The executable instructions may then be executed by a hardware-based computer processor of the computing device. In some embodiments, such processes or portions thereof may be implemented on multiple computing devices and/or multiple processors, serially or in parallel.

Conditional language such as, among others, "can," "could," "might" or "may," unless specifically stated otherwise, are otherwise understood within the context as used in general to convey that some examples include, while other examples do not include, some features, elements and/or steps. Thus, such conditional language is not generally intended to imply that features, elements and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements or blocks in the flow diagrams described herein and/or depicted in the attached figures should be understood as potentially representing modules, segments, or portions of code which include executable instructions for implementing specific logical functions or elements in the process. Alternate examples are included within the scope of the examples described herein in which elements or functions may be deleted, executed out of order from that shown, or discussed, including substantially concurrently or in reverse order, depending on the functionality involved as would be understood by those skilled in the art.

It should be emphasized that many variations and modifications may be made to the above-described examples, the elements of which are to be understood as being among other acceptable examples. All such modifications and variations are intended to be included herein within the scope of this disclosure.

Any process descriptions, elements or blocks in the flow diagrams described herein and/or depicted in the attached figures should be understood as potentially representing modules, segments, or portions of code which include executable instructions for implementing specific logical functions or elements in the process. Alternate implementations are included within the scope of the examples described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

## Claims

1. A method of wireless power transfer, the method comprising:
energizing a first wireless charging pad, the first wireless charging pad comprising a switching circuit;
repeatedly toggling the switching circuit between a first switch configuration and a second switch configuration, wherein switches of a first half bridge of the switching circuit change a state between the first switch configuration and the second switch configuration, and wherein switches of a second half bridge of the switching circuit remain in a same state for the first switch configuration and the second switch configuration; and
causing wireless power transfer from the first wireless charging pad to a second wireless charging pad using a voltage generated from the repeatedly toggling.

2. The method of Claim 1, further comprising:
detecting one or more conditions,
wherein the repeatedly toggling is performed in response to detecting the one or more conditions, preferably wherein the one or more conditions relate to at least one of a load interfaced with the switching circuit, a voltage of a battery pack of a vehicle that includes the second wireless charging pad, or a voltage of a power supply associated with the first wireless charging pad.

3. The method of one of the preceding claims, wherein a vehicle includes the second wireless charging pad, and a voltage of a battery pack of the vehicle is in a range from 200 Volts to 1000 Volts.

4. The method of one of the preceding claims, wherein the switching circuit includes an H bridge circuit.

5. A method of wireless power transfer, the method comprising:
wirelessly receiving power from a ground pad at a vehicle pad of a vehicle, the vehicle pad comprising a switching circuit; and
repeatedly toggling the switching circuit between a first switch configuration and a second switch configuration, wherein switches of a first half bridge of the switching circuit change a state between the first switch configuration and the second switch configuration, and wherein switches of a second half bridge of the switching circuit are in a same state for both the first switch configuration and the second switch configuration.

6. The method of Claim 5, further comprising:
detecting one or more conditions,
wherein the repeatedly toggling is performed in response to detecting the one or more conditions, preferably wherein the one or more conditions relate to at least one of a load interfaced with the switching circuit, a voltage range of a battery pack of the vehicle, or a voltage range of a power supply associated with the ground pad.

7. The method of claim 5 or 6, wherein a voltage range of a battery pack of the vehicle is in a range from 200 Volts to 1000 Volts.

8. The method of one of the preceding Claims, wherein there is an unbalanced duty cycle between the first switch configuration and the second switch configuration for the repeatedly toggling.

9. The method of one of the preceding Claims, wherein the repeatedly toggling the switching circuit between the first switch configuration and the second switch configuration results in a lower voltage swing across a resonant tank of the vehicle pad or the first wireless charging pad that is electrically connected to the switching circuit compared with toggling the switching circuit between a third switch configuration, the first switch configuration, and the second switch configuration.

10. The method of one of Claims 5 to 9, further comprising charging a battery pack of the vehicle based on the power wirelessly received from the ground pad.

11. A wireless charging pad comprising:
a switching circuit comprising a first half bridge and a second half bridge;
a resonant tank electrically connected to the switching circuit, the resonant tank comprising a coil arranged for wireless power transfer; and
a switch control circuit configured to repeatedly toggle the switching circuit between a first switch configuration and a second switch configuration, wherein the first half bridge changes a state between the first switch configuration and the second switch configuration, and wherein the second half bridge is in a same state in both the first switch configuration and the second switch configuration,
wherein the wireless charging pad is configured to transfer sufficient wireless power for charging a battery pack with an operating voltage of at least 350 Volts.

12. The wireless charging pad of Claim 11, wherein the switch control circuit is further configured to detect one or more conditions, and wherein the switch control circuit configured to repeatedly toggle the switching circuit between the first switch configuration and the second switch configuration in response to detecting the one or more conditions, preferably wherein the one or more conditions relate to at least one of a load interfaced with the switching circuit, a voltage range of a battery pack of a vehicle, or a voltage range of a power supply associated with the wireless charging pad.

13. The wireless charging pad of claim 11 or 12, wherein the wireless charging pad is a ground pad.

14. The wireless charging pad of one of Claims 11 to 13, wherein the repeatedly toggling the switching circuit between the first switch configuration and the second switch configuration results in a lower voltage swing across the resonant tank compared with toggling the switching circuit between a third switch configuration, the first switch configuration, and the second switch configuration.

15. The wireless charging pad of one of Claims 11 to 14, wherein the switching circuit comprises an H bridge circuit.
